Europäisches Patentamt

European Patent Office

Office européen des brevets

(19)

(11) EP 0 783 227 A2

# (12) DEMANDE DE BREVET EUROPEEN

(43) Date de publication:
09.07.1997 Bulletin 1997/28

(51) Int Cl.$^6$: H04N 3/15

(21) Numéro de dépôt: 96402927.6

(22) Date de dépôt: 31.12.1996

(84) Etats contractants désignés:
DE FR GB IT

(30) Priorité: 04.01.1996 FR 9600045

(71) Demandeur: COMMISSARIAT A L'ENERGIE ATOMIQUE
75015 Paris Cédex 15 (FR)

(72) Inventeurs:
• Mottin, Eric
  38950 St Martin le Vinaux (FR)
• Pantigny, Philippe
  38640 Claix (FR)

(74) Mandataire: Signore, Robert et al
c/o BREVATOME
25, rue de Ponthieu
75008 Paris (FR)

(54) **Dispositif de lecture de barrettes de détecteurs avec effet TDI**

(57) La présente invention concerne un dispositif de lecture de barrettes de détecteurs avec effet TDI, comprenant :

- un ensemble de lignes de détecteurs, chaque détecteur étant apte à intégrer sa propre contribution pendant un temps d'intégration, chaque contribution correspondant à une image dans un point élémentaire d'un réseau de points élémentaires ;
- un démultiplexeur séquencé en fonction des détecteurs et des numéros d'images, apte à aiguiller la contribution de chaque détecteur dans un premier point élémentaire déterminé par ce détecteur et le numéro de l'image courante ;
- un sommateur apte à effectuer la somme de la contribution des détecteurs consistant à choisir pour chaque détecteur un second point élémentaire déterminé en fonction du numéro de l'image courant et du détecteur considéré et à effectuer la somme de ces points élémentaires de façon à réaliser l'effet TDI sur les détecteurs de façon à obtenir la contribution de la ligne de détecteur.

FIG. 9

**Description**

Domaine technique

La présente invention concerne un dispositif de lecture de barrettes de détecteurs avec effet TDI ("Time Delay Integration" ou intégration à temps de retard").

Le domaine considéré est celui des dispositifs de détection de rayonnement, en particulier les rayonnements émis aux longueurs d'ondes de l'infrarouge, du visible et des rayons X.

L'invention se rapporte plus particulièrement à l'architecture des circuits de lecture dont les éléments photosensibles sont lus par un balayage optique du champ d'observation.

Etat de la technique antérieure

Les dispositifs de détection photonique concernés par l'invention sont de type quantique. Dans les détecteurs quantiques, les photons reçus par le détecteur sont convertis en électrons et/ou trous selon le principe de la détection intrinsèque (transition bande de valence à bande de conduction directe) ou extrinsèque (transition entre niveau intermédiaire et bande de conduction). Les détecteurs quantiques peuvent être regroupés en deux catégories :

- les détecteurs photovoltaïques dont l'intensité du courant varie en fonction du flux incident ;
- les détecteurs photoconducteurs dont la résistance varie en fonction du flux incident.

Les détecteurs quantiques peuvent donc être assimilés à un générateur de courant, plus ou moins idéal, qui délivre un courant dont l'intensité varie en fonction du flux incident moyennant que ces détecteurs soient convenablement polarisés.

Dans les caméras considérées ici, les images sont faites à partir de barrettes de détecteurs. Le champ d'observation d'une caméra est balayé par un dispositif optique de façon à former une image.

Vu le nombre de détecteurs utilisés dans les caméras actuelles, et vu le pas des détecteurs, il est absolument nécessaire d'utiliser un circuit spécifique, que l'on désignera par la suite par circuit de lecture, pour conditionner le signal délivré par le circuit de détection et le multiplexer vers un nombre restreint de chaînes de traitement de l'information.

Le circuit de détection peut être réalisé soit directement sur le circuit de lecture, soit sur un autre circuit. Dans le premier cas, on parle de composant monolithique et dans le deuxième de composant hybride car les détecteurs du circuit de détection sont interconnectés aux étages d'entrée du circuit de lecture par des technologies adaptées comme l'hybridation par billes.

Le principe de balayage optique pour l'obtention d'une image est le suivant :

Un dispositif optique de type miroir tournant balaye la scène à une vitesse $V_{bal}$ de façon à obtenir une image matricielle.

Le nombre de lignes $N_{lig}$ de cette image est égal au nombre de détecteurs Di de la barrette. Le nombre de colonnes COLj de l'image est :

$$N_{col} = \frac{L.T \, int}{V_{bal}}$$

où :

L est la largeur du champ d'observation,
Tint le temps de pose pour acquérir une colonne de l'image,
$V_{bal}$ la vitesse de balayage.

L'inconvénient du mode de lecture par barrette balayée provient essentiellement du fait que le temps de pose pour chaque colonne COLj est limité. Ceci limite les performances en termes de rapport signal à bruit. De plus si la barrette pour des raisons technologiques présente un ou plusieurs détecteurs en défauts cela entraîne la présence de une ou plusieurs lignes mortes sur l'image.

Pour contourner cet inconvénient on utilise des barrettes avec effet TDI ("Time Delay Integration") .

L'invention porte sur une architecture de circuit de lecture particulièrement adaptée à la lecture de barrettes de détecteurs avec un tel effet TDI. Il existe en effet une catégorie de caméras où l'image est formée en balayant optiquement une mosaïque de détecteurs. Le nombre de lignes de cette mosaïque est fonction du format de l'image et son nombre de colonnes est tel qu'il permette d'améliorer le rapport signal sur bruit de la caméra. Ceci est obtenu en sommant à des instants retardés et synchrones du balayage optique les informations délivrées par les détecteurs d'une même ligne de mosaïque. Ce mode de lecture des informations est désigné par "Time Delay Integration" dans la littérature anglaise.

Ce mode de lecture consiste à remplacer la contribution d'un détecteur par les contributions de plusieurs détecteurs sommées entre elles. Ainsi le temps d'intégration équivalent pour la prise d'image est multiplié par le nombre de détecteurs qui participent à l'effet TDI.

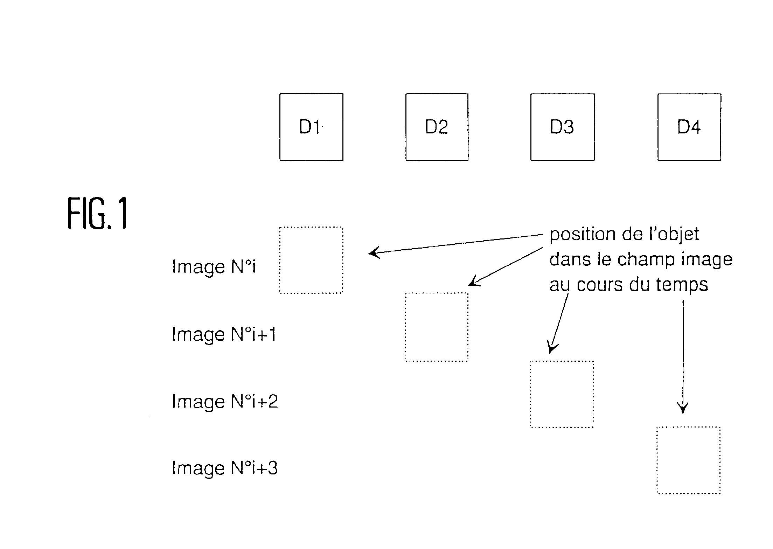

Pour réaliser l'effet TDI il faut ajouter au balayage nécessaire à la formation de l'image un balayage supplémentaire. Ce balayage est illustré sur la figure 1.

Le pixel résultant de l'effet TDI est obtenu en sommant la contribution des détecteurs aux instants suivants :

$$\text{Pixel N°i} = D1(\text{image n°i}) + D2(\text{image n°i+1}) + D3(\text{image n°i+2}) + D4(\text{image n°i+3})$$

Ceci permet d'améliorer le rapport signal à bruit de la caméra. En effet ce rapport est amélioré par le facteur : $\sqrt{N_{TDI}}$ où $N_{TDI}$ est le nombre de détecteurs sur lequel se fait l'effet TDI.

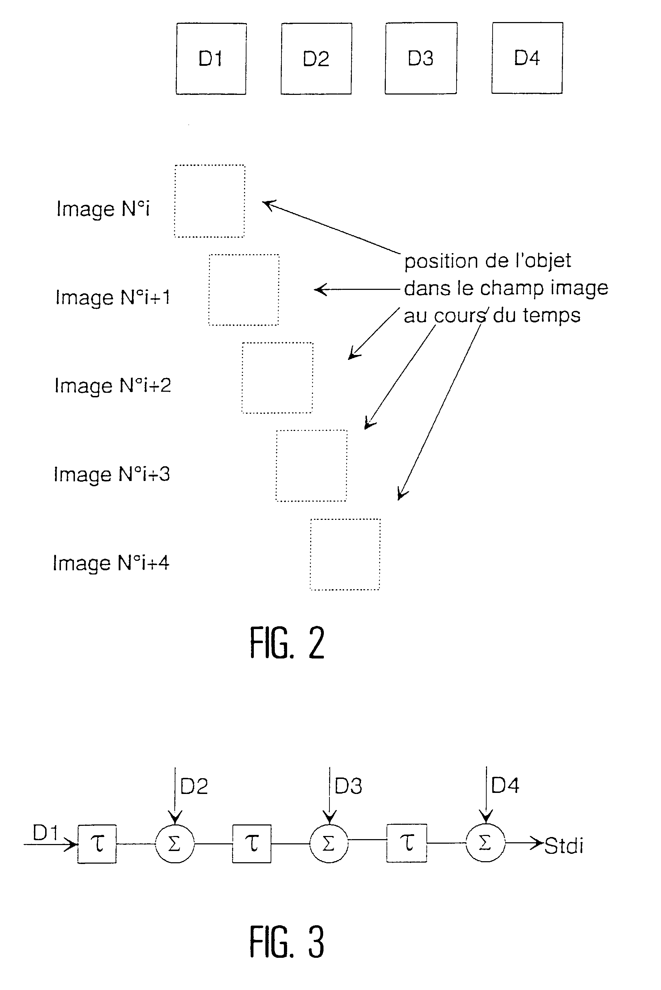

L'effet TDI peut se faire avec un taux de suréchantillonnage optique donné. Sur la figure 2 on a représenté un taux de suréchantillonnage optique de 3. Ce qui donne pour l'obtention du pixel avec effet TDI la relation suivante :

$$\text{Pixel N°i} = D1(\text{image n°i}) + D2(\text{image n°i+3}) + D3(\text{image n°i+6}) + D4(\text{image n°i+9})$$

Ceci permet d'améliorer la fonction de transfert de modulation (FTM) de la caméra, c'est-à-dire la résolution spatiale.

Dans la suite de la description on utilise cet exemple de TDI sur quatre détecteurs avec un taux de suréchantillonnage optique de 3. L'invention décrite ici porte sur une architecture de circuit de lecture particulièrement adaptée à la lecture de barrette avec effet TDI.

Les dispositifs de lecture de barrettes de détecteurs avec effet TDI sont de deux types :

- les dispositifs à transfert de charges, réalisés par des technologies spécifiques à faible densité d'intégration ;
- les dispositifs CMOS, nécessitant l'utilisation d'un intégrateur en capacité commuté pour chaque cellule de sommation analogique. Cet intégrateur est très encombrant et dissipe beaucoup d'énergie.

**Circuits de lecture de type dispositifs à transfert de charges**

Ces circuits de lecture sont fabriqués dans des filières spécifiques permettant de réaliser des dispositifs à transfert de charges.

Le schéma de principe de l'architecture CCD est donné sur la figure 3.

Ce synoptique représente un pixel obtenu par effet TDI sur quatre détecteurs sans suréchantillonnage optique. Le suréchantillonnage pour cette architecture consiste à intercaler autant de cellules de retard (τ) que de suréchantillons avant de sommer (Σ) l'information avec le voisin.

L'organisation du circuit de lecture se décompose en deux parties :

- point élémentaire où l'intégration du courant détecteur est réalisée ;
- multiplexage et sommation des informations pour réaliser l'effet TDI.

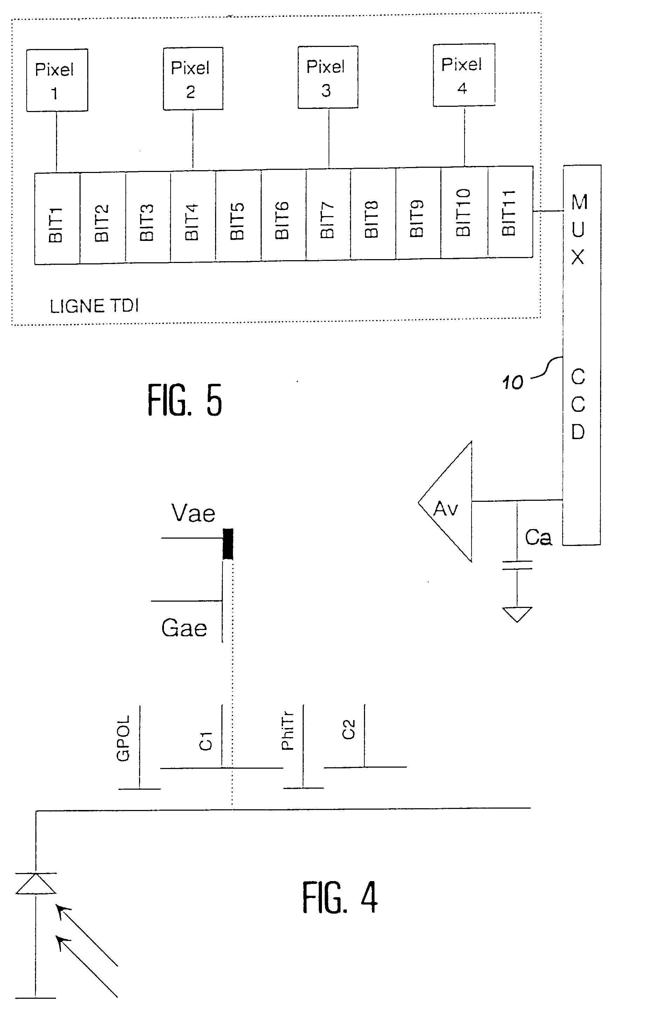

Sur la figure 4 est illustré le schéma de principe du point élémentaire.
On trouve dans chaque point élémentaire :

- un dispositif d'adaptation d'impédance Gpol entre le détecteur et le condensateur MOS ;
- un condensateur MOS, G, dont le canal d'inversion est utilisé comme site de stockage ;
- un interrupteur PhiTr qui permet de contrôler l'injection des charges stockées dans le canal d'un registre à transfert de charges.

Le synoptique du multiplexeur qui assure l'effet TDI est représenté sur la figure 5.
Le multiplexage et la sommation des charges stockées dans les points élémentaires se font au moyen d'un registre à transfert de charges.

A l'extrémité de ce registre le paquet de charges séquencé dans le registre contient un pixel avec effet TDI sur N détecteurs. Ensuite on trouve un registre parallèle qui multiplexe vers le(s) étage(s) de sortie du circuit.

En fonctionnement, à chaque trame, le canal d'inversion du condensateur d'intégration est vidé de toute charge au moyen du dispositif de remise à zéro. Le courant débité par chaque détecteur de la barrette est alors intégré pendant le temps de pose dans le canal d'inversion du condensateur d'intégration.

La charge intégrée $Qpel_{L,c}$ dans la capacité de stockage C1 du point élémentaire n°(L, C) est reliée à l'intensité $Id_{l,c}$ du courant débité par le détecteur n°(L,C) et au temps de pose par la relation :

$$Qpel_{l,c} = Id_{l,c} \times Tpose$$

L représentant le numéro de la ligne de détection et C représentant le numéro du détecteur dans la ligne de détection.

Tout ou partie de la charge stockée dans chacun de ces condensateurs d'intégration est alors transférée dans le registre à transfert de charges qui réalise l'effet TDI.

On obtient le pixel TDI en réalisant la sommation suivante :

$$Qtdi_{L} = \sum_{C=1}^{Nb\ det} Qpel_{l,c}$$

En sortie de ce registre TDI les charges sont multiplexées par un registre parallèle 10 vers l'étage de sortie. C'est dans l'étage de sortie que les charges sont converties en tension par injection dans une capacité Cs convenablement polarisée. La tension aux bornes de ce condensateur est lue par un amplificateur Av de tension à très forte impédance d'entrée et à faible impédance de sortie.

L'expression de l'amplitude $\delta Vs_l$ de l'impulsion de tension de sortie correspondant à la lecture de la ligne de détecteurs n°(L) est donnée par l'expression :

$$\delta Vs_l = \frac{Aq}{Cs} \cdot \sum_{C=1}^{Nb\ det} Qpel_{l,c}$$

où Cs est le facteur de conversion charge tension de l'étage de sortie et Aq le gain en charges du circuit.

Ces circuits de lecture présentent l'avantage de la simplicité de conception car ici l'effet TDI se fait en charge. En effet l'addition retardée de paquets de charges entre eux est inhérente au principe de fonctionnement d'un registre à transfert de charges.

Le balayage TDI est monodirectionnel. Les détecteurs ne peuvent pas être balayés dans les deux sens pour des raisons topologiques. Le registre parallèle n'est implantable que d'un côté.

Enfin, ils présentent l'inconvénient majeur de devoir être réalisés dans des filières spécifiques dont la densité d'intégration est inférieure à celles des filières CMOS classiques. D'autre part les outils d'aide à la conception dans ces filières sont beaucoup moins développés que pour les filières CMOS.

**Circuits de lecture de type CMOS**

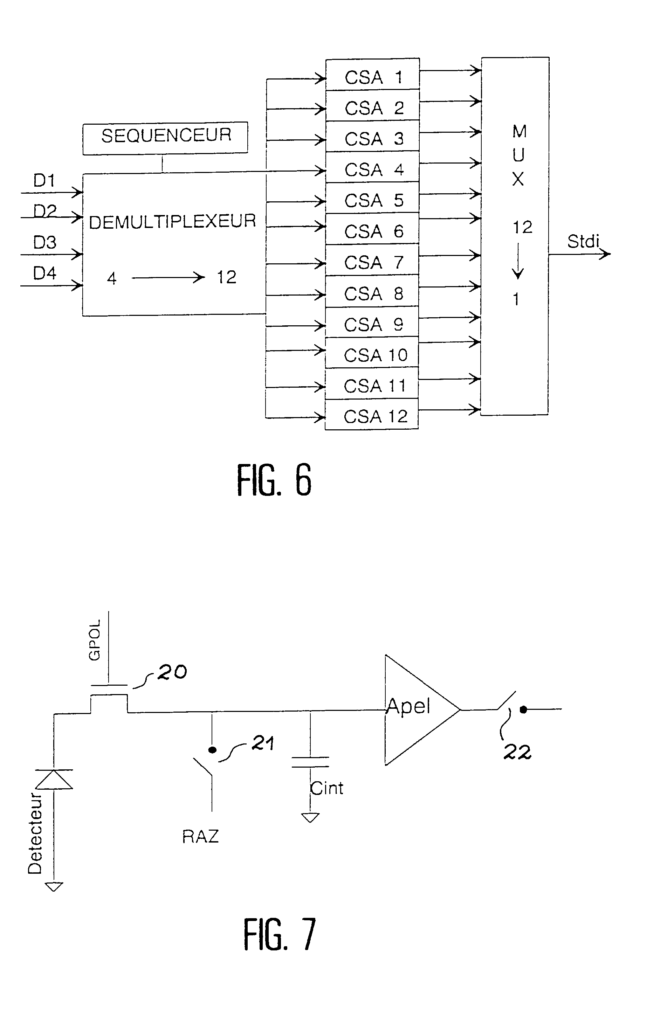

Le synoptique de l'architecture est donné sur la figure 6, chaque cellule CSA étant une cellule de sommation analogique.

Le synoptique donne le principe d'architecture du circuit de lecture. On trouve douze mémoires analogiques qui permettent de construire au cours du temps le pixel TDI en ajoutant successivement les contributions de chaque détecteur. Le démultiplexeur 4 vers 12 permet d'aiguiller au cours du temps les contributions de chaque diode dans les mémoires de sommation. C'est ce séquencement qui réalise pratiquement l'effet TDI.

L'organisation du circuit de lecture pour un TDI sur quatre détecteurs avec un suréchantillonnage de trois se décompose en deux parties :

- le point élémentaire où le courant détecteur est intégré et converti en tension ;
- le multiplexage et la sommation des tensions dans une mémoire analogique de façon à réaliser l'effet TDI.

On trouve au minimum dans chaque point élémentaire :

- un dispositif d'adaptation d'impédance entre le détecteur et le condensateur d'intégration ;
- un condensateur réalisé au moyen d'un transistor MOS dont la capacité grille-source permet de convertir le courant en tension par intégration ;
- un interrupteur 21 de réinitialisation du condensateur d'intégration à chaque trame, réalisé au moyen de transistors MOS ;
- un amplificateur Apel de tension à forte impédance d'entrée qui permet de lire la tension aux bornes du condensateur d'intégration Cint et d'attaquer à basse impédance l'amplificateur de sortie ;
- un interrupteur 22 qui permet de multiplexer cette tension vers l'un des douze sites de mémorisation.

Ce point élémentaire est représenté sur la figure 7.
Dans la partie réalisant la fonction TDI pour la ligne de quatre détecteurs Pel1, Pel2, Pel3, Pel4 on trouve :

- douze intégrateurs CSA1 à CSA12 de type capacité commuté qui permettent de réaliser la sommation de tension et la mémorisation des pixels TDI ainsi obtenus ;
- pour chaque intégrateur on trouve un dispositif de remise à zéro RAZ qui réinitialise la capacité de sommation une fois que le pixel TDI a été obtenu par sommations successives ;
- un démultiplexeur (Demux) 4 vers 12 qui assure le séquencement temporel des informations de façon à effectuer la sommation TDI ;
- un interrupteur par sortie de chaque intégrateur pour multiplexer les douze sites d'intégration sur une voie de façon à obtenir l'information TDI correspondant à une ligne de détecteurs.

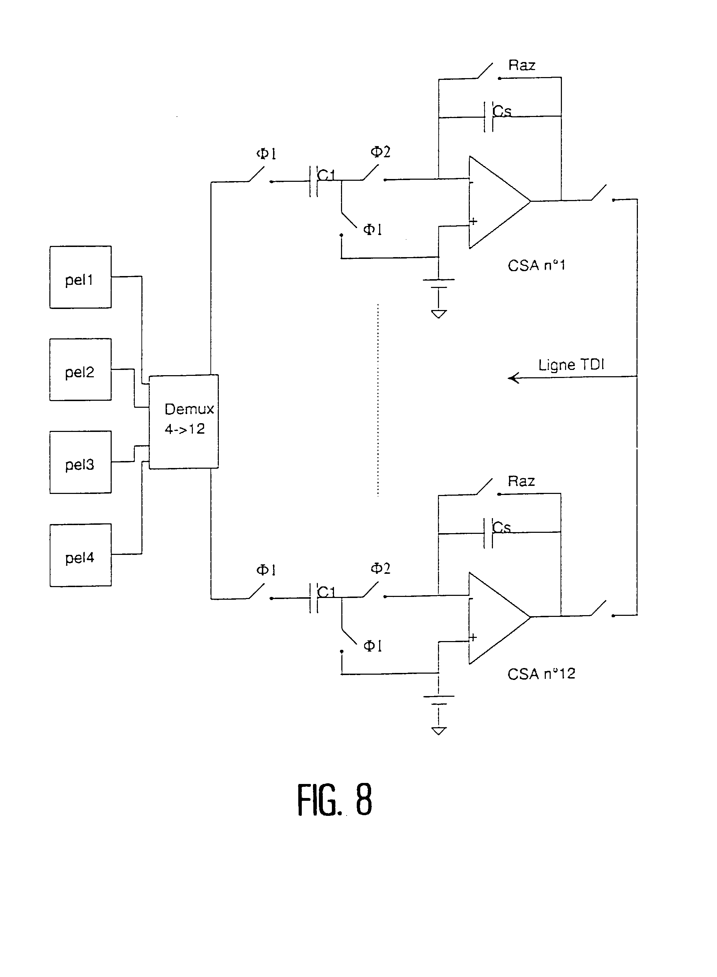

Le synoptique de cette fonction est représenté sur la figure 8.
L'expression de l'amplitude $\delta Vs_l$ de l'impulsion de tension de sortie correspondant à la lecture de la ligne de détecteurs n°(L) est donnée par l'expression :

$$\delta Vs_l = \frac{C1}{Cs} \cdot \sum_{c=1}^{Nb\ det} Qpel_{L,c}$$

où C1/Cs est le facteur de gain du sommateur de tension.
Le séquencement des informations des détecteurs pour obtenir l'effet TDI est décrit dans le tableau I, situé en fin de description, où les informations des détecteurs sont aiguillées dans les cellules de sommation.
Ce type d'architecture présente l'avantage de pouvoir être réalisé dans des filières qui sont couramment disponibles et qui bénéficient d'importants efforts de recherche et développement.
Cette architecture nécessite l'utilisation d'un intégrateur en capacité commuté pour chaque cellule de sommation analogique. Ces amplificateurs sont très encombrants et dissipent de la puissance électrique. De plus comme l'information d'une ligne TDI est obtenue en multiplexant ces amplificateurs, les dispersions de point de repos de ces amplificateurs sont très gênantes et se confondent avec le signal des détecteurs.
L'invention a pour objet de concevoir un circuit de lecture en technologie CMOS capable de lire une barrette de détecteurs et de réaliser un effet TDI sur plusieurs détecteurs, ce circuit devant répondre aux impératifs suivants :

- faible consommation électrique ;
- encombrement restreint du "layout" de façon à améliorer les rendements de fabrication ;
- faible sensibilité aux dispersions spatiales de technologie, c'est-à-dire la tension de seuil des transistors varie très faiblement en fonction de la position du transistor sur la puce.

Exposé de l'invention

La présente invention concerne un dispositif de lecture de barrettes avec effet TDI, caractérisé en ce qu'il comprend :

- un ensemble de lignes de détecteurs, chaque détecteur étant apte à intégrer sa propre contribution pendant un temps d'intégration, chaque contribution correspondant à une image dans un point élémentaire d'un réseau de points élémentaires ;
- un démultiplexeur séquencé en fonction des détecteurs et des numéros d'images, apte à aiguiller, simultanément pour tous les détecteurs, la contribution de chaque détecteur dans un premier point élémentaire déterminé par ce détecteur et le numéro de l'image courante ;

- un sommateur apte à effectuer la somme de la contribution des détecteurs consistant à choisir pour chaque détecteur un second point élémentaire déterminé en fonction du numéro de l'image courante et du détecteur considéré et à effectuer la somme de ces points élémentaires de façon à réaliser l'effet TDI sur les détecteurs et obtenir la contribution de la ligne de détecteur.

Avantageusement les points élémentaires sont remplis et lus ensuite par permutation circulaire, le séquencement étant indiqué dans les tableaux II et III donnés en annexe.

Les détecteurs peuvent être des détecteurs quantiques (par exemple des détecteurs photovoltaïques (diodes) ou photoconducteurs) .

Les détecteurs peuvent être thermiques mais dans ce cas, l'invention présente moins d'intérêt à cause de leurs faibles performances actuelles en terme de vitesse de réponse.

Avantageusement chaque point élémentaire (PEL(i,j)) comprend :

- un dispositif d'adaptation d'impédance (AI;Tp) ;
- un dispositif d'intégration et de stockage (Cpel;Tc) ;
- un dispositif d'adressage (Ta).

Le dispositif d'adaptation d'impédance est situé entre le détecteur considéré et le dispositif d'intégration, de stockage et d'évacuation de charge.

Le dispositif d'intégration, de stockage et d'évacuation de charge est réalisé au moyen d'au moins un transistor MOS dont la source et le drain sont connectés au détecteur via un interrupteur et dont la grille est pilotée par une horloge.

Le dispositif d'adressage permet de commuter la source et/ou le drain du transistor MOS sur une connexion commune aux points élémentaires d'une même colonne, dite bus colonne.

L'amplificateur de charges est connecté à l'extrémité de chaque bus colonne, et le multiplexage des sorties des amplificateurs de charges vers au moins un amplificateur de sortie (Ap) se fait au moyen d'au moins un interrupteur.

Avantageusement le dispositif d'adaptation d'impédance est un transistor MOS (Tp).

Avantageusement le dispositif d'adressage est un transistor MOS (Ta).

Dans les dispositifs de l'art antérieur CCD l'image finale est la somme des contributions de l'ensemble des détecteurs en additionnant successivement la contribution du détecteur suivant. L'image finale est donnée par le dernier bit du registre CCD.

Dans l'invention, chaque point élémentaire stocke la contribution d'un seul détecteur. Pour obtenir le point image TDI correspondant à une ligne de détecteur, un point élémentaire par détecteur est vidé dans un sommateur qui effectue la somme des contributions. Cette somme est effectuée en un temps image et non pas, comme avec les dispositifs de l'art antérieur, en un temps nécessaire à la réalisation de l'effet TDI.

Dans l'invention l'effet TDI est obtenu en effectuant la somme de la contribution de chaque détecteur avec le suivant en prenant en compte un point élémentaire déterminé en fonction de l'image courante et du détecteur considéré avec un retard. Ce retard est défini par les contraintes liées au dispositif de prise de vues et permet d'améliorer la résolution spatiale dans le sens du balayage

Avantageusement le nombre de cellules de mémorisation pour le détecteur n°i est donné par la relation suivante :

$$N_{ci} = (N_d - i)\tau + 2$$

où $N_{ci}$ est le nombre de cellules de mémorisation pour le détecteur n°i.

Dans le cas d'un dispositif TDI bidirectionnel le nombre de cellules de mémorisation est différent selon le numéro du détecteur pour permettre au balayage optique de s'effectuer dans les deux sens. Le nombre de cellules de mémorisation par détecteur est alors le suivant :

$$N_{ci} = MAX\ ((N_d - i)\tau + 2,\ (N_d - (Nd - i + 1))\tau + 2)$$

L'invention concerne un dispositif réalisé par une filière technologique à haute densité d'intégration (par exemple CMOS), apte à lire une barrette de détecteurs et de réaliser un effet TDI sur plusieurs détecteurs. Le nombre de détecteurs maximum est déterminé par les règles d'interconnexion de la technologie utilisée.

Dans le dispositif de l'invention, l'intégration du courant de détection se fait dans chaque point élémentaire et l'effet TDI est réalisé par le multiplexeur et le sommateur de la contribution de chaque détecteur.

Les dispositifs de l'art antérieur comportaient un nombre de cellules de mémorisation égal au produit du nombre de détecteurs par le taux de suréchantillonnage. Chaque cellule de mémorisation était munie d'un amplificateur recevant la somme de tous les détecteurs du pixel TDI. Ces dispositifs étaient de ce fait encombrants.

Le dispositif de l'invention ne comporte pas de mémoire commune à tous les détecteurs. Une mémoire est propre à chaque détecteur. La mémoire est contenue dans chaque point élémentaire et on n'utilise qu'un seul amplificateur pour réaliser la fonction de sommateur.

l'invention présente l'avantage que :

- la mémorisation se fait dans le point élémentaire par un transistor. Contrairement aux dispositifs de l'art antérieur, aucun amplificateur de tension n'est nécessaire ;
- le sommateur est un amplificateur muni d'un condensateur et d'un dispositif de remise à zéro, par exemple un amplificateur opérationnel.

Brève description des dessins

- La figure 1 illustre le balayage supplémentaire nécessaire pour réaliser l'effet TDI ;
- la figure 2 illustre l'effet TDI avec un taux de suréchantillonnage optique donné ;
- la figure 3 illustre le schéma de principe de l'architecture CCD ;
- la figure 4 illustre le schéma de principe du point élémentaire ;
- la figure 5 illustre le synoptique du multiplexeur qui assure l'effet TDI ;
- la figure 6 illustre un synoptique donnant le principe d'architecture du circuit de lecture de type CMOS ;
- la figure 7 illustre le synoptique du point élémentaire ;
- la figure 8 illustre la partie réalisant la fonction TDI pour une ligne de quatre détecteurs ;
- la figure 9 illustre le schéma de principe d'une réalisation selon l'invention ;
- la figure 10 illustre l'architecture du circuit de l'invention ;
- la figure 11 illustre le schéma de principe d'une barrette TDI ;
- les figures 12A et 12B illustrent une architecture de circuit de lecture de type SCA.

Exposé détaillé de modes de réalisation

L'invention propose une architecture où la mémorisation des informations ne se fait pas pour réaliser l'effet TDI, c'est-à-dire que l'on utilise une mémoire analogique pour sommer successivement la contribution de chaque détecteur. Dans cette solution chaque détecteur intègre sa propre contribution avant sommation dans une ou plusieurs mémoires prévues à cet effet. Ensuite l'effet TDI est obtenu en aiguillant simultanément la contribution de chaque détecteur vers un seul amplificateur de sommation.

La barrette est un ensemble de N lignes de détecteurs et de M colonnes de détecteurs. Dans la suite de la description on prendra M=4

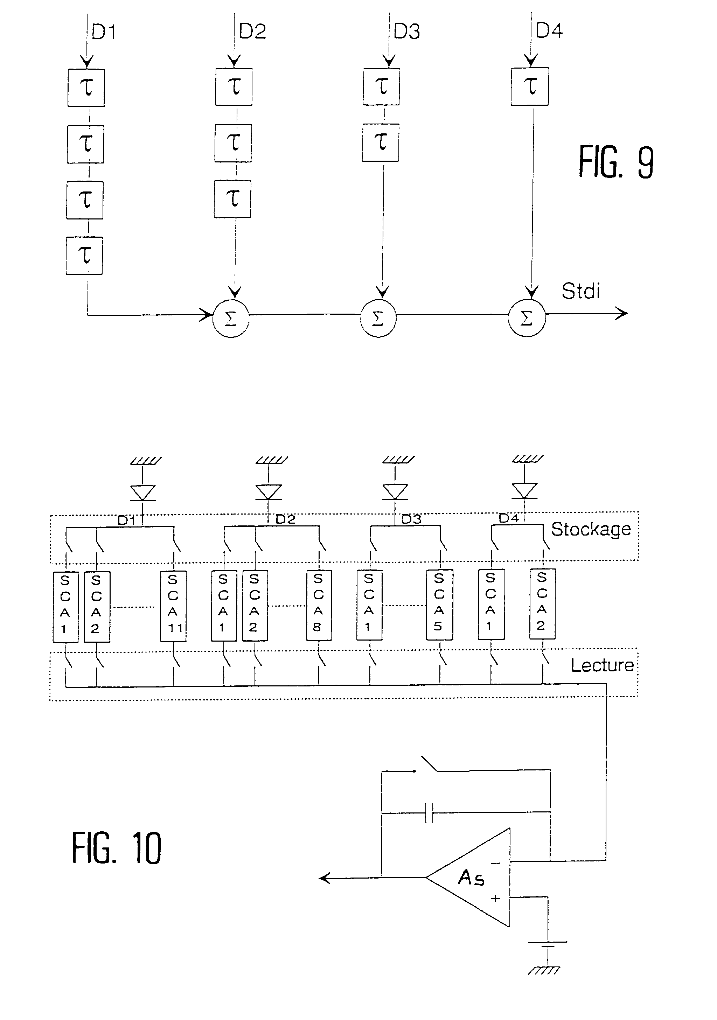

Le schéma de principe pour un effet TDI sur quatre détecteurs D1, D2, D3 et D4 sans suréchantillonnage est représenté sur la figure 9, avec des cellules de retard ($\tau$) et des cellules de sommation ($\Sigma$).

Les cellules de mémorisation sont dédiées à chaque détecteur et la mémorisation de l'information se fait avant TDI.

La sommation se fait en charge simultanément pour les quatre détecteurs à l'aide d'un amplificateur unique.

Pour chaque ligne TDI on trouve des interrupteurs qui permettent d'intégrer le courant de chaque détecteur dans un moyen de stockage. De la même façon on a une batterie d'interrupteurs qui permet pour chaque détecteur de vider les moyens de stockage associés vers l'amplificateur de sommation As.

A chaque trame un interrupteur situé entre le détecteur et le transistor Tmos de stockage est fermé, tous les autres interrupteurs étant ouverts. Ceci permet l'intégration de tous les détecteurs de manière synchrone. Chaque moyen de stockage est adressé par un séquencement approprié pour réaliser l'effet TDI. Ceci sera décrit ultérieurement.

Simultanément avec l'intégration dans un moyen de stockage, la lecture d'un autre moyen de stockage de stockage se fait.

De la même façon et de manière synchrone pour chaque détecteur un interrupteur situé entre le moyen de stockage et le bus de sommation est fermé, tous les autres étant ouverts. Alors la grille du transistor de stockage correspondante est pulsée de façon à provoquer l'injection des charges stockées sur le bus de sommation. La charge stockée dans ce moyen de stockage est alors remise à zéro.

Le bus colonne étant supposé maintenu à un potentiel constant par l'amplificateur de charges dont l'impédance d'entrée est par ailleurs supposée infinie, l'impulsion de courant ainsi provoquée par l'injection de charges est convertie en tension par un sommateur qui est un amplificateur de charges. Sa sortie peut alors être multiplexée vers la sortie vidéo pour être traitée.

Il est alors possible de réinitialiser l'amplificateur de charges, d'ouvrir le dispositif d'adressage colonne et enfin de créer un nouveau puits de potentiel, vide de toute charge, sous la grille du moyen de stockage avant de procéder à la lecture de la ligne suivante.

L'expression de la variation de tension $\delta Vc_{ij}$ en sortie de l'amplificateur de charges connecté à la colonne n°j en fonction du courant $Id_{ij}$ délivré par le détecteur du point élémentaire n° (i,j) est donnée par l'expression :

$$\delta Vc_{ij} = Id_{ij} \times Tpose/Ca$$

où Ca est la capacité du condensateur de contre-réaction de l'amplificateur de charges.

La capacité du bus colonne n'intervient pas dans la fonction de transfert de cette solution car l'amplificateur de charges est supposé être à entrée différentielle et à courant d'entrée nul. Le bus colonne étant maintenu à un potentiel constant par cet amplificateur, il ne dérive aucun courant de déplacement. Autrement dit, il y a conservation de la charge dans le circuit.

La variation de la tension de sortie $\delta Vc_{ij}$ correspondant à la lecture de l'information délivrée par le point élémentaire n°(i,j) est donc donnée par la relation suivante :

$$\delta Vs_{ij} = As \times \delta Vc_{ij} = As \times Id_{ij} \times Tpose/Ca$$

où As est le gain en tension de l'amplificateur de tension de sortie.

Les moyens de stockage sont dédiées à chaque détecteur et la mémorisation de l'information se fait avant effet TDI. La sommation se fait en charge simultanément pour les quatre détecteurs à l'aide d'un amplificateur unique.

Pour chaque ligne TDI on trouve des interrupteurs qui permettent d'intégrer le courant de chaque détecteur dans un moyen de stockage. De la même façon on a une batterie d'interrupteurs qui permet pour chaque détecteur de vider le moyen de stockage associé vers l'amplificateur de sommation. L'architecture du circuit est représenté sur la figure 10.

L'expression de la variation de tension $\delta Vs_L$ en sortie de l'amplificateur de charges pour la ligne de détecteurs n°L en fonction des courants des diodes est donnés par la relation suivante :

$$\delta Vs_L = \frac{T\,int}{Ca} \times \sum_{i=1}^{Ntdi} Ii.\,i\big(t + 3T\,int.(i-1)\big)$$

où Tint est le temps d'intégration, Ca la capacité du condensateur de l'amplificateur de sommation de charges.

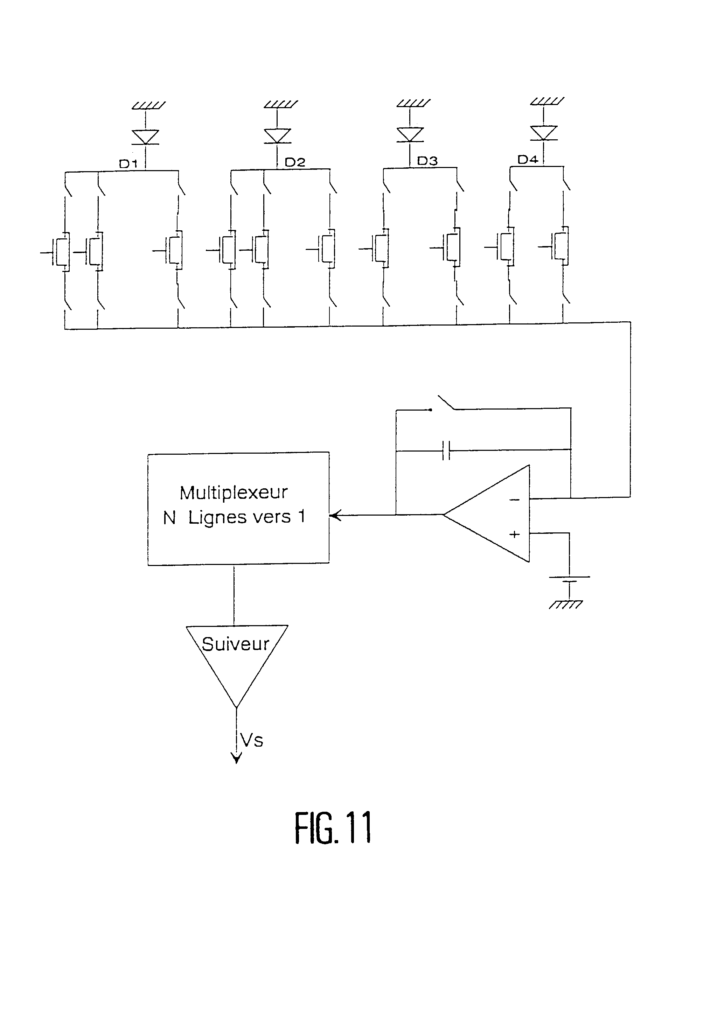

Dans un exemple de réalisation le schéma de principe d'une ligne d'une barrette TDI est donné sur la figure 11.

Ce circuit est supposé lire une barrette de N lignes de M détecteurs où M est le nombre de détecteurs sur lequel se fait l'effet TDI. Les sorties des amplificateurs de chaque ligne TDI sont multiplexées au moyen d'un multiplexeur de N vers 1.

Le schéma électrique comporte :

- des détecteurs : par exemple les détecteurs peuvent être des détecteurs photovoltaïques de type N sur substrat P. Ils sont schématisés par D1, D2, D3, D4 ;
- des points élémentaires, illustrés sur la figure 12A, se composent de :

  • un dispositif d'adaptation d'impédance AI, réalisé par exemple par un transistor MOS, entre un détecteur DET (i,j) et un dispositif d'intégration, de stockage et d'évacuation d'une charge,
  • un dispositif d'intégration et de stockage Cpel, réalisé par exemple au moyen d'un transistor MOS, dont la source et/ou le drain sont connectés au détecteur via le dispositif d'adaptation d'impédance et dont la commande est pilotée par une horloge,
  • le dispositif d'adressage, symbolisé dans un souci de simplification, par un interrupteur, réalisé par exemple par un transistor MOS, qui permet de commuter la source et/ou le drain du transistor MOS de stockage sur une connexion commune aux points élémentaires d'une même colonne, dite bus colonne BCj pour évacuer les charges.

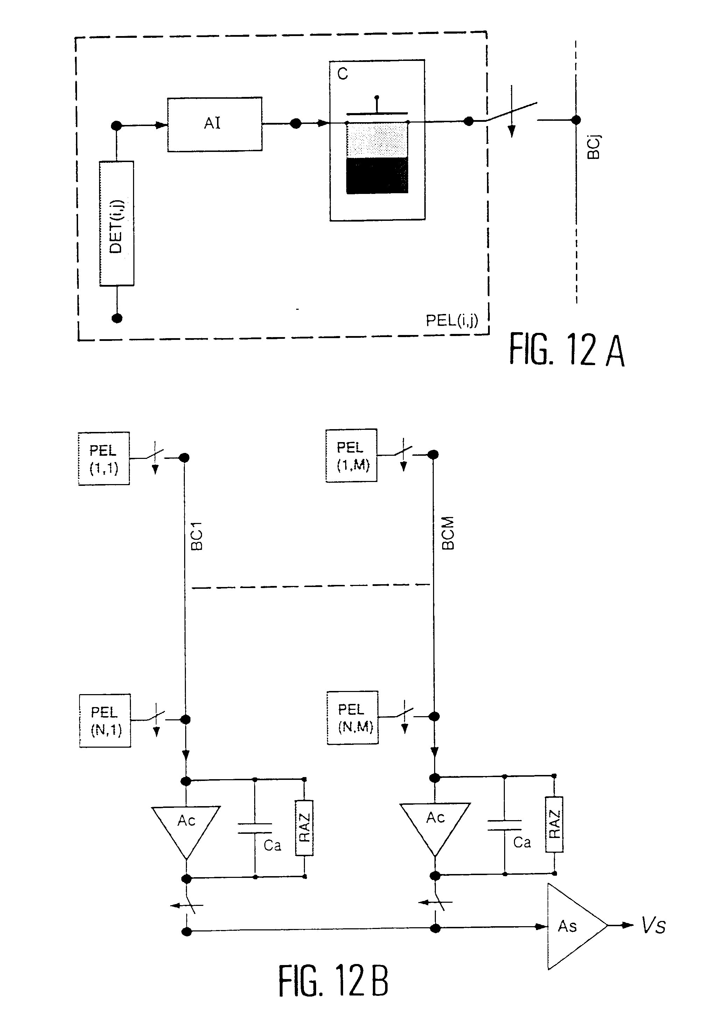

Un amplificateur de charges Acj est connecté à l'extrémité de chaque bus colonne BCj (figure 12B). Le multiplexage des sorties amplificateur de charges vers un ou plusieurs amplificateurs de sortie As se fait au moyen d'interrupteurs.

A chaque trame, les interrupteurs situés entre les détecteurs et le transistor MOS de stockage sont fermés de manière synchrone, les interrupteurs situés entre les transistors MOS de stockage et les bus colonnes BCj étant ouverts.

Le courant délivré par chaque détecteur est alors intégré dans le canal d'inversion du transistor MOS pendant la durée Tpose.

A la fin du temps de pose, les interrupteurs situés entre les détecteurs et les transistors MOS sont ouverts de manière synchrone. On a donc le même temps de pose pour chacun des détecteurs.

Les lignes de détecteurs sont alors sélectionnées les unes après les autres. A chaque temps ligne, les interrupteurs d'une même ligne situés entre les transistors MOS de stockage et les bus colonnes sont fermés. La grille des transistors MOS de stockage d'une même ligne est alors pulsée de façon à provoquer l'injection des charges stockées dans son canal sur le bus colonne et, par voie de conséquence la remise à zéro de charge stockée dans le canal d'inversion du transistor MOS.

Pour réaliser l'effet TDI sur quatre détecteurs avec un taux de suréchantillonnage de trois, il faut pour le détecteur n°1 onze mémoires analogiques pour stocker séquentiellement les onze dernières trames associées à ce détecteur. En effet, on doit réaliser la sommation suivante : d1(i1)+d2(i4)+d3(i7)+d4(i10).

Entre le détecteur n°1 et le détecteur n°4, il y a un retard de dix images dû à la vitesse de balayage. Il faut par conséquent conserver l'information du détecteur n°1 pendant dix trames avant de sommer sa contribution avec celle du détecteur n°4.

Mais comme il est impossible d'intégrer le courant détecteur dans un transistor de stockage et de lire simultanément la charge stockée cela nécessite un transistor de stockage supplémentaire pour intégrer l'image n°11 et lire l'image n°1.

En effet les transistors de stockage sont remplis et lus ensuite par permutation circulaire. Le séquencement est indiqué dans les tableaux II et III situés en fin de description :

Le tableau II montre l'aiguillage des informations pour le stockage dans les mémoires en fonction du numéro du détecteur et du numéro de la trame considéré.

Le tableau III montre l'aiguillage des informations pour la relecture dans les mémoires en fonction du numéro du détecteur et du numéro de la trame considéré.

Dans la description on a traité le cas d'un TDI sur quatre détecteurs et un taux de suréchantillonnage de trois. Mais ce principe de TDI peut s'accommoder de n'importe quel nombre de détecteurs et d'un taux de suréchantillonnage variable.

En effet, on doit réaliser la sommation suivante :

$$Stdi = \sum_{d=1}^{Nd} Dd\big(i + (d - 1)\tau\big)$$

où :

$\tau$ est le taux de suréchantillonnage,
i est le numéro de la trame,
Nd est le nombre de diodes sur lequel se fait le TDI.

Le nombre de cellules de mémorisation pour le détecteur n°i est donné par la relation suivante :

$$N_{ci} = (N_d - i) \tau + 2$$

où $N_{ci}$ est le nombre de cellules de mémorisation pour le détecteur n°i.

Dans le cas où le balayage optique s'effectue dans un sens et dans le sens inverse, le dispositif est alors appelé dispositif avec effet TDI bidirectionnel le nombre de cellules de mémorisation est différent selon le numéro de détecteur pour permettre au TDI de s'effectuer dans les deux sens. Le nombre de cellules de mémorisation par détecteur est alors le suivant :

$$N_{ci} = MAX (N_d - i) \tau + 2, (N_d - (N_d - i + 1)) \tau + 2$$

Les avantages des points élémentaires décrits dans l'invention sont les suivants :

- nombre limité de transistors Tmos dans le point élémentaire ;
- non respect des règles de latch-up et des gardes entre Nmos et Pmos ;

- dispositif de remise à zéro inutile.

On obtient les avantages suivants en terme de linéarité, de réjections des alimentations et de dispersions spatiales.

## Linéarité

La charge intégrée dans le point élémentaire est convertie en tension par l'amplificateur de charges. la linéarité est donc contrôlée pour la plus grande partie par le coefficient de tension de la capacité du condensateur de contre-réaction de l'amplificateur de charges.

Ce type de condensateurs spécifiques est disponible dans les filières développées pour réaliser des circuits de type capacité commutée.

La fonction de transfert de la solution proposée est donc bien plus linéaire que :

- les circuits de type DTC dont l'efficacité de transfert, c'est-à-dire l'atténuation entrée-sortie, dépend du nombre de transfert et/ou de la charge à transférer ;
- les circuits de type suiveurs commutés dont le gain en tension n'est pas constant de point à point et/ou sur toute leur excursion d'entrée ;
- les circuits de type partition bus colonne où la capacité du bus colonne présente un coefficient de tension élevé à cause de la capacité des diodes des interrupteurs qui lui sont connectés qui varie avec la quantité de charges lues.

## Réjection des alimentations et des phases de commande

La solution proposée est nettement supérieure à celle des suiveurs commutés car il n'y a plus d'alimentation critique dans le point élémentaire, aussi bien au niveau de la réinitialisation du point élémentaire, que des alimentations du suiveur.

Par ailleurs, le potentiel de chaque bus colonne est maintenu constant par l'amplificateur de charges alors que dans les circuits de type suiveurs commutés ou partition sur bus colonne, ce potentiel varie énormément. Cette caractéristique limite les couplages capacitifs entre les différentes fonctions implantées dans le point élémentaire. Ce point est très important car la plupart des noeuds électriques du point élémentaire sont à haute impédance, donc très sensibles, et que ces couplages vont augmenter lorsque le pas des détecteurs va diminuer.

Enfin, il est important de noter que dans une architecture des points élémentaires tels que décrits, les moyens de stockage sont réinitialisés ligne après ligne, et non pas simultanément comme dans d'autres solutions, ce qui a pour effet de minimiser les appels de courant dans les alimentations et, par voie de conséquence, de relâcher les contraintes sur les résistances des bus d'alimentation.

## Dispersions spatiales

Dans la solution proposée, les dispersions des paramètres de la technologie ne sont pas critiques dans le point élémentaire. Il suffit que la charge stockable dans le condensateur de stockage soit suffisamment grande.

Les dispersions spatiales sont essentiellement contrôlées par le coefficient de conversion des amplificateurs de charges. Il n'y a donc pas de dispersions le long d'une même colonne.

Par rapport à un circuit de lecture classique les avantages apportés par cette solution sont les suivants :

- encombrement du "layout" beaucoup plus restreint, ce qui permet d'améliorer grandement les rendements de fabrication ;
- un seul amplificateur est utilisé pour lire une ligne de détecteurs, ce qui supprime tous les problèmes de dispersions entre amplificateurs qui existent avec une solution classique.

Le circuit de lecture de l'invention ne nécessite pas de filière spécifique. Bien au contraire, il s'appuie sur les filières analogiques développées pour le traitement du signal.

L'architecture proposée est compatible avec un adressage sélectif des détecteurs de la ligne. Elle permet donc d'éliminer du pixel TDI des détecteurs en défauts ou ayant un excès de bruit, ce qui permet d'améliorer le rapport signal à bruit du pixel considéré.

TABLEAU I

| N° trame | CSA 1 | CSA 2 | CSA 3 | CSA 4 | CSA 5 | CSA6 | CSA 7 | CSA 8 | CSA 9 | CSA10 | CSA11 | CSA 12 |
|---|---|---|---|---|---|---|---|---|---|---|---|---|
| i | D1 | | | | | | | | | | | |
| i+1 | | D1 | | | | | | | | | | |
| i+2 | | | D1 | | | | | | | | | |
| i+3 | D2 | | | D1 | | | | | | | | |
| i+4 | | D2 | | | D1 | | | | | | | |
| i+5 | | | D2 | | | D1 | | | | | | |
| i+6 | D3 | | | D2 | | | D1 | | | | | |
| i+7 | | D3 | | | D2 | | | D1 | | | | |
| i+8 | | | D3 | | | D2 | | | D1 | | | |
| i+9 | D4 | | | D3 | | | D2 | | | D1 | | |
| i+10 | READ | D4 | | | D3 | | | D2 | | | D1 | |
| i+11 | RAZ | READ | D4 | | | D3 | | | D2 | | | D1 |
| i+12 | D1 | RAZ | READ | D4 | | | D3 | | | D2 | | |
| i+13 | | D1 | RAZ | READ | D4 | | | D3 | | | D2 | |
| i+14 | | | D1 | RAZ | READ | D4 | | | D3 | | | D2 |
| i+15 | D2 | | | D1 | RAZ | READ | D4 | | | D3 | | |
| i+16 | | D2 | | | D1 | RAZ | READ | D4 | | | D3 | |
| i+17 | | | D2 | | | D1 | RAZ | READ | D4 | | | D3 |
| i+18 | D3 | | | D2 | | | D1 | RAZ | READ | D4 | | |
| i+19 | | D3 | | | D2 | | | D1 | RAZ | READ | D4 | |
| i+20 | | | D3 | | | D2 | | | D1 | RAZ | READ | D4 |
| i+21 | D4 | | | D3 | | | D2 | | | D1 | RAZ | READ |
| i+22 | READ | D4 | | | D3 | | | D2 | | | D1 | RAZ |
| i+23 | RAZ | READ | D4 | | | D3 | | | D2 | | | D1 |

TABLEAU II

| TRAME | DETECTEUR n°1 | | | | | | | | | | | DETECTEUR n°2 | | | | | | | | DETECTEUR n°3 | | | | | DETECTEUR n°4 | |
|---|---|---|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 1 | 2 | 3 | 4 | 5 | 6 | 7 | 8 | 1 | 2 | 3 | 4 | 5 | 1 | 2 |
| 1 | x | | | | | | | | | | | x | | | | | | | | x | | | | | x | |
| 2 | | x | | | | | | | | | | | x | | | | | | | | x | | | | | x |
| 3 | | | x | | | | | | | | | | | x | | | | | | | | x | | | x | |
| 4 | | | | x | | | | | | | | | | | x | | | | | | | | x | | | x |
| 5 | | | | | x | | | | | | | | | | | x | | | | | | | | x | x | |
| 6 | | | | | | x | | | | | | | | | | | x | | | x | | | | | | x |
| 7 | | | | | | | x | | | | | | | | | | | x | | | x | | | | x | |
| 8 | | | | | | | | x | | | | | | | | | | | x | | | x | | | | x |
| 9 | | | | | | | | | x | | | x | | | | | | | | | | | x | | x | |
| 10 | | | | | | | | | | x | | | x | | | | | | | | | | | x | | x |
| 11 | | | | | | | | | | | x | | | x | | | | | | x | | | | | x | |
| 12 | x | | | | | | | | | | | | | | x | | | | | x | | | | | | x |
| 13 | | x | | | | | | | | | | | | | | x | | | | | | x | | | x | |
| 14 | | | x | | | | | | | | | | | | | | x | | | | | | x | | | x |
| 15 | | | | x | | | | | | | | | | | | | | x | | | | | | x | x | |
| 16 | | | | | x | | | | | | | | | | | | | | x | x | | | | | | x |
| 17 | | | | | | x | | | | | | x | | | | | | | | | x | | | | x | |
| 18 | | | | | | | x | | | | | | x | | | | | | | | | x | | | | x |
| 19 | | | | | | | | x | | | | | | x | | | | | | | | | x | | x | |
| 20 | | | | | | | | | x | | | | | | x | | | | | | | | | x | | x |
| 21 | | | | | | | | | | x | | | | | | x | | | | x | | | | | x | |
| 22 | | | | | | | | | | | x | | | | | | x | | | | x | | | | | x |
| 23 | x | | | | | | | | | | | | | | | | | x | | | | x | | | x | |
| 24 | | x | | | | | | | | | | | | | | | | | x | | | | x | | | x |

EP 0 783 227 A2

TABLEAU II   (continued)

| TRAME | DETECTEUR n°1 | | | | | | | | | DETECTEUR n°2 | | | | | | | | | DETECTEUR n°3 | | | | | DETECTEUR n°4 | |
|---|---|---|---|---|---|---|---|---|---|---|---|---|---|---|---|---|---|---|---|---|---|---|---|---|---|
| 25 | | | x | | | | | | | x | | | | | | | | | | | | | x | x | |

EP 0 783 227 A2

TABLEAU III

| TRAME | DETECTEUR n°1 | | | | | | | | | | | DETECTEUR n°2 | | | | | | | | DETECTEUR n°3 | | | | | DETECTEUR n°4 | |
|---|---|---|---|---|---|---|---|---|---|---|---|---|---|---|---|---|---|---|---|---|---|---|---|---|---|---|
|  | 1 | 2 | 3 | 4 | 5 | 6 | 7 | 8 | 9 | 10 | 11 | 1 | 2 | 3 | 4 | 5 | 6 | 7 | 8 | 1 | 2 | 3 | 4 | 5 | 1 | 2 |
| 1 |  |  |  |  |  |  |  |  |  |  |  |  |  |  |  |  |  |  |  |  |  |  |  |  |  |  |
| 2 |  |  |  |  |  |  |  |  |  |  |  |  |  |  |  |  |  |  |  |  |  |  |  |  |  |  |
| 3 |  |  |  |  |  |  |  |  |  |  |  |  |  |  |  |  |  |  |  |  |  |  |  |  |  |  |
| 4 |  |  |  |  |  |  |  |  |  |  |  |  |  |  |  |  |  |  |  |  |  |  |  |  |  |  |
| 5 |  |  |  |  |  |  |  |  |  |  |  |  |  |  |  |  |  |  |  |  |  |  |  |  |  |  |
| 6 |  |  |  |  |  |  |  |  |  |  |  |  |  |  |  |  |  |  |  |  |  |  |  |  |  |  |
| 7 |  |  |  |  |  |  |  |  |  |  |  |  |  |  |  |  |  |  |  |  |  |  |  |  |  |  |
| 8 |  |  |  |  |  |  |  |  |  |  |  |  |  |  |  |  |  |  |  |  |  |  |  |  |  |  |
| 9 |  |  |  |  |  |  |  |  |  |  |  |  |  |  |  |  |  |  |  |  |  |  |  |  |  |  |
| 10 |  |  |  |  |  |  |  |  |  |  |  |  |  |  |  |  |  |  |  |  |  |  |  |  |  |  |
| 11 | x |  |  |  |  |  |  |  |  |  |  | x |  |  |  |  |  |  |  | x |  |  |  |  | x |  |
| 12 |  | x |  |  |  |  |  |  |  |  |  |  | x |  |  |  |  |  |  |  | x |  |  |  |  | x |
| 13 |  |  | x |  |  |  |  |  |  |  |  |  |  | x |  |  |  |  |  |  |  | x |  |  | x |  |
| 14 |  |  |  | x |  |  |  |  |  |  |  |  |  |  | x |  |  |  |  |  |  |  | x |  |  | x |
| 15 |  |  |  |  | x |  |  |  |  |  |  |  |  |  |  | x |  |  |  |  |  |  |  | x | x |  |
| 16 |  |  |  |  |  | x |  |  |  |  |  |  |  |  |  |  | x |  |  | x |  |  |  |  |  | x |
| 17 |  |  |  |  |  |  | x |  |  |  |  |  |  |  |  |  |  | x |  |  | x |  |  |  | x |  |
| 18 |  |  |  |  |  |  |  | x |  |  |  |  |  |  |  |  |  |  | x |  |  | x |  |  |  | x |
| 19 |  |  |  |  |  |  |  |  | x |  |  | x |  |  |  |  |  |  |  |  |  | x |  |  | x |  |
| 20 |  |  |  |  |  |  |  |  |  | x |  |  | x |  |  |  |  |  |  |  |  |  |  | x |  | x |
| 21 |  |  |  |  |  |  |  |  |  |  | x |  |  | x |  |  |  |  |  | x |  |  |  |  | x |  |
| 22 | x |  |  |  |  |  |  |  |  |  |  |  |  |  | x |  |  |  |  |  | x |  |  |  |  | x |
| 23 |  | x |  |  |  |  |  |  |  |  |  |  |  |  |  | x |  |  |  |  |  | x |  |  | x |  |
| 24 |  |  | x |  |  |  |  |  |  |  |  |  |  |  |  |  | x |  |  |  |  |  | x |  |  | x |

14

TABLEAU III   (continued)

| TRAME | DETECTEUR n°1 | | | | | | | | | DETECTEUR n°2 | | | | | | | DETECTEUR n°3 | | | | | DETECTEUR n°4 | |
|---|---|---|---|---|---|---|---|---|---|---|---|---|---|---|---|---|---|---|---|---|---|---|---|
| 25 | | | | x | | | | | | | | | | | | x | | | | | x | x | |

EP 0 783 227 A2

EP 0 783 227 A2

REFERENCES

[1] "Time Division Multiplexed Time Delay Integration" de R.J. Martin et G.E. Riley (SPIE vol. 930, Infrared Detectors and Arrays, 1988)

[2] "Optimizing Scanning Array Performance using Gain Normalisation and Time Delay Integration (TDI) Pixel Deselection During Readout Hybrid and Focal Plane Testing" de A.D. Adams et all. (SPIE, vol. 1686, Test and Evaluation of IT Detectors and Arrays 1992)

[3] "The Infrared and Electro-Optical Systems Handbook" (volume 3, page 328, SPIE Press)

**Revendications**

1.  Dispositif de lecture de barrette avec effet TDI, caractérisé en ce qu'il comprend :

    -   un ensemble de lignes de détecteurs, chaque détecteur étant apte à intégrer sa propre contribution pendant un temps d'intégration, chaque contribution correspondant à une image dans un point élémentaire d'un réseau de points élémentaires ;
    -   un démultiplexeur séquencé en fonction des détecteurs et des numéros d'images, apte à aiguiller, simultanément pour tous les détecteurs, la contribution de chaque détecteur dans un premier point élémentaire déterminé par ce détecteur et le numéro de l'image courante ;
    -   un sommateur apte à effectuer la somme de la contribution des détecteurs consistant à choisir pour chaque détecteur un second point élémentaire déterminé en fonction du numéro de l'image courante et du détecteur considéré et à effectuer la somme de ces points élémentaires de façon à réaliser l'effet TDI sur les détecteurs et obtenir la contribution de la ligne de détecteur.

2.  Dispositif selon la revendication 1, caractérisé en ce que les points élémentaires sont remplis et lus ensuite par permutation circulaire, le séquencement étant indiqué dans les tableaux II et III

3.  Dispositif selon la revendication 1, caractérisé en ce que les détecteurs sont des détecteurs quantiques.

4.  Dispositif selon la revendication 1, caractérisé en ce que chaque point élémentaire (PEL(i,j)) comprend :

    -   un dispositif d'adaptation d'impédance (AI;Tp) ;
    -   un dispositif d'intégration et de stockage (Cpel;Tc) ;
    -   un dispositif d'adressage (Ta).

5.  Dispositif selon la revendication 4, caractérisé en ce que le dispositif d'adaptation d'impédance est situé entre le détecteur considéré et le dispositif d'intégration, de stockage et d'évacuation de charge.

6.  Dispositif selon la revendication 5, caractérisé en ce que le dispositif d'intégration, de stockage et d'évacuation de charge est réalisé au moyen d'au moins un transistor MOS dont la source et le drain sont connectés au détecteur via un interrupteur et dont la grille est pilotée par une horloge.

7.  Dispositif selon la revendication 6, caractérisé en ce que le dispositif d'adressage permet de commuter la source et/ou le drain du transistor MOS sur une connexion commune aux points élémentaires d'une même colonne, dite bus colonne.

8.  Dispositif selon la revendication 7, caractérisé en ce que l'amplificateur de charges est connecté à l'extrémité de chaque bus colonne, et le multiplexage des sorties des amplificateurs de charges vers au moins un amplificateur de sortie (Ap) se fait au moyen d'au moins un interrupteur.

9.  Dispositif selon la revendication 4, caractérisé en ce que le dispositif d'adaptation d'impédance est un transistor MOS (Tp).

10. Dispositif selon la revendication 4, caractérisé en ce que le dispositif d'adressage est un transistor MOS (Ta).

11. Dispositif selon la revendication 1, caractérisé en ce que le nombre de cellules de mémorisation pour le détecteur n°i est donné par la relation suivante :

$$N_{ci} = (N_d\text{-}i)\ \tau\text{+}2$$

où $N_{ci}$ est le nombre de cellules de mémorisation pour le détecteur n°i.

12. Dispositif selon la revendication 10, caractérisé en ce que, dans le cas d'un dispositif TDI bidirectionnel, le nombre de cellules de mémorisation est différent selon le numéro du détecteur pour permettre au balayage optique de s'effectuer dans les deux sens, le nombre de cellules de mémorisation par détecteur étant alors le suivant :

$$N_{ci} = MAX\ ((N_d\text{-}i)\ \tau\text{+}2,\ (N_d\text{-}\ (Nd\text{-}i\text{+}1))\ \tau\text{+}2)\ .$$

D1  D2  D3  D4

# FIG. 1

Image N°i

Image N°i+1

Image N°i+2

Image N°i+3

position de l'objet
dans le champ image
au cours du temps

D1  D2  D3  D4

Image N°i

Image N°i+1

Image N°i+2

Image N°i+3

Image N°i+4

position de l'objet
dans le champ image
au cours du temps

# FIG. 2

D1 → τ → Σ (D2) → τ → Σ (D3) → τ → Σ (D4) → Stdi

# FIG. 3

| Pixel 1 | Pixel 2 | Pixel 3 | Pixel 4 |
|---------|---------|---------|---------|

| BIT1 | BIT2 | BIT3 | BIT4 | BIT5 | BIT6 | BIT7 | BIT8 | BIT9 | BIT10 | BIT11 |
|------|------|------|------|------|------|------|------|------|-------|-------|

LIGNE TDI

M U X

C C D

Av

Ca

10

## FIG. 5

Vae

Gae

GPOL

C1

PhiTr

C2

## FIG. 4

FIG. 6

FIG. 7

FIG. 8

FIG. 9

FIG. 10

FIG. 11

FIG. 12 A

FIG. 12 B